# EUROPEAN PATENT APPLICATION

(11) **EP 4 801 090 A1**
(43) Date of publication of application: **02.09.2026**
(21) Application number: 25382175.5
(22) Date of filing: 26.02.2025
(51) Int. Cl.: H04W 12/45, H04W 12/30, H04W 8/20, G06F 12/02

(54) **METHOD, CONFIGURATION PROGRAM, APPLICATION PROGRAM DATASET, COMPUTER-READABLE DATA CAR-RIER AS WELL AS SERVER DEVICE FOR CONFIGURING A SECURE ELEMENT IN A USER DEVICE WITH MEMORY QUOTA**

(71) Applicant: Giesecke+Devrient Mobile Security Germany GmbH, 81677 München (DE)
(72) Inventor: ALEJANDRE, German, 08820 El Prat de Llobregat (Barcelona) (ES); GARRIDO, Jose Antonio, 08820 El Prat de Llobregat (Barcelona) (ES); GIFRE, Clara, 08820 El Prat de Llobregat (Barcelona) (ES); PATIÑO, David, 08820 El Prat de Llobregat (Barcelona) (ES); ALEJANDRE, German, 08820 El Prat de Llobregat (Barcelona) (ES)
(74) Representative: LKGLOBAL Partnerschaftsgesellschaft mbB

(57) **Abstract**

A method, as well as a corresponding configuration program (10), application program dataset (A), a user device (5), and server device (3) are provided, wherein for configuring the user device (5), the method comprises the steps of providing at least one user profile dataset (P) for a user (U) to operate a secure element (6), such as an eUICC, of the user device (5), to access a secured service, such as at least one mobile telecommunication network (N); and assigning a memory quota (M) to the at least one user profile dataset (P) for determining an amount of memory space in a secure memory location (7) of the secure element (6) to be used and/or occupied by the at least one user profile dataset (P).

## Description

### Technical Field

The present disclosure relates to the field of configuring user devices, for example, smart cards, transaction cards, personal mobile devices or Internet-of-Things (IoT) devices, or alike, for being securely operated by an authorized user, for instance for conducting secure transactions and/or participating in communication networks. In particular, the present disclosure relates to a method of configuring a user device, in particular for secure operation involving a trusted entity, a configuration program for configuring a user device, in particular for secure operation involving a trusted entity, to an application program dataset for operating a secure element of a user device, such as an eUICC, user device, in particular for allowing secure operation involving a trusted entity, and to a user device, such as a mobile device or an IoT device, in particular to be configured for secure operation involving a trusted entity, and to a server device, such as a security server providing a secure location for handling user profiles, in particular for secure operation of user devices involving a trusted entity.

### Background of the Invention

User devices, such as smart cards (e.g., so-called java cards), identification cards, transaction cards, personal mobile devices or IoT-devices, are known from the prior art. The user devices are commonly configured to employ electronic subscriber profiles authenticating a user for secure transactions or communicating on telecommunication networks, e.g., mobile networks. Such user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic user and/or subscriber profiles that may allow the user devices to access secured services, such as to connect to one or more mobile networks. A subscriber profile (e.g., an eSIM profile) may be generated by a mobile network operator (MNO) and may be stored, e.g., downloaded to a mobile user device. The profile may then be installed on a secure element of the user device and used for communication over a corresponding mobile network by the user device.

The profiles are commonly provided as user profile datasets based on diversified data relating to a respective user. For accessing secured services, such as data accesses, access to data objects, and/or mobile telecommunication networks, the user profile datasets comprise respective security credentials. There is no limitation with regards to how much memory space a user profile dataset can occupy in a secure storage location of the secure element, such as an eUICC. If several profiles are present in the secure element, for example, by downloading additional profiles from a secure server without deleting any of them, the memory space available in the secure element can be completely occupied. In particular in case of an increasing demand to be able to enable several profiles, also referred to as Multi Enable Profile (MEP) cases, memory space issues can be aggravated not only due to a sheer number of user profile datasets, but also in that they might be managed by different entities not coordinating memory space usage between each other.

US 12 035 412 B2, for example, refers to methods and systems for providing UICC/eUICC related response information to information requests at a cellular router. The method includes receiving an information request from a wireless communication module, and determining whether a response to the information request is cached. When the response information is not cached, forwarding the information request to a massive SIM apparatus (MSA). MSA will then respond to the information request. A response based on the MSA's response will then be sent to the wireless communication module for the information request. When the response information is cached, retrieve the response information and send it to the wireless communication module. The method includes identifying a SIM profile, determining status of the SIM profile, and comparing the status to a predefined value. When the status is not the same as the predefined value, generating the alert and storing the alert.

GSMA RSP relates to different schemes, especially SGP.22, which includes Multi Enable Profile support. GlobalPlatform issued an amendment C, regarding a concept titled "Cumulative Granted Memory" is defined for Security Domains and their sub-hierarchies. In that specification, the objective is to ensure that a specific SD does not overcome a specific memory amount.

In Card Specifications issued by GlobalPlatform, the assignation of memory quota through INSTALL command is described.

Furthermore, it has to be considered that the secure elements are run by operation systems (OS) containing software and/or firmware for operating the secure elements, including the user profile datasets and any application program datasets, such as applets, which can be provided in connection thereto. Those OS need to be up to date in order to provide full and reliable functionality of the secure elements. An OS Update is especially relevant with the deployment of embedded Secure Elements (eSE) in the form of eUICC or alike. As opposite of traditional pluggable SIMs that can be inserted and removed, eSEs are soldered into user devices, making it very difficult (or costly) to replace them during the life cycle of the user devices.

Consequently, there is a need for so-called firmware-upgrades and/or updates that allow to modify the content of the eSE in the event that it has to be kept up to date and/or a technical issue has to be fixed. For example, one possible reason for that firmware has to be kept up to date is if a related standard, such as a GSMA specification, relating to the user device changes or is being newly implemented. In any case, such updates can be carried out with the help of an Open Firmware Loader (OFL), or alike, which is specifically designed software component in charge of firmware upgrades including OS updates in the secure element. The need to be able to update the software for certain SE/TRE has generated many different approaches worldwide. In some solutions, there is a separate entity (ITL - Image Trusted Loader, OFL, Update Agent) which is kept in charge in the SE/TRE while the full OS, or only part of it, is changed. The states of the SE/TRE are then not really defined according to any global entity.

WO 2023 006247 A1, for example, relates to a method and an apparatus for updating software loaded on a secure element, SE, which SE comprises an update agent handler, and an update agent. In a first step, a request to back-up a current version of software loaded on the SE is received at the SE. The request is preferably sent from a device, external to the SE. Upon receiving the backup request, the SE performs a secure backup of the current software version, and returns the software backup to the device, to be stored thereon. In a further step, the SE performs an update process of the current software version, to obtain an updated software version. If the update process fails, a rollback is performed at the SE to restore the software backup as a new current software version on the SE.

EP 4 120 066 A1 relates a method and a device for upgrading an Executable Load File (ELF), having dependencies, on a Secure Element, SE. The method comprises in a first step receiving a request for upgrading an ELF, the request comprising a first identifier, identifying a first ELF version loaded on the SE, a second identifier, identifying a second ELF version loaded on the SE, and an upgrade option. Upon receiving the request, dependencies of the first ELF version from other ELFs loaded or stored on the SE are determined. Subsequently, if dependencies have been determined, it is checked whether the upgrade request is allowed. If the update request is allowed, an upgrade session is started, and the first ELF version is replaced with the second ELF version. The dependencies of the first ELF version are then linked to the second ELF version.

WO 2022 161946 A2 describes a system comprising at least one secure server computer configured to execute a predefined code sequence in a transactional fashion on input data to produce output data, and configured to provide a signed response packet that proves that the code sequence (unmodified since its installation) was executed on the input data and resulted in the output data. In an embodiment, the code and its secure isolated execution environment on the secure server computer system may be transactional. In an embodiment, the customer critical code and the secure isolated execution environment may be instantiated each time the application (executing on another computer) transmits a request with input data. Upon completion of the transaction, the secure server computer may remove the customer critical code and the secure execution environment from system memory, deleting its context and any other data related to the environment.

US 10 599 472 B2 relates to a software updating method. A target file is divided into segments, where some segments are updated by patching, while other segments are updated by archiving. The segmentation of the update allows very large files such as DYLD shared caches to be patched in-place, i.e., by using free space available within the file to perform patching rather than requiring enough free space on disk to store both the new version and the old version of the file. The segmentation of the update also allows each segment to be updated individually by the most optimal update method (copy, patch, or archive) so that the size of the update file can be minimized.

Methods for providing user profile data sets and operating system datasets to secure elements of user devices, including OS updates, as described above, may not fully satisfy all requirements regarding their deployability and availability on the one hand, as well as functional safety and security on the other hand. For example, it is desirable that on the data side both, the user profile datasets and the OS, as well as on the hardware side, the secure elements have the same origin and preferably same state of development in order to ensure functional safety and security. However, due to deployability and availability restrictions, it may not be always assured that the user profile datasets, the OS, as well as the secure elements have the same origin, corresponding versions, or meet certain future requirements, especially if an implementation of a new specification or standard for operating the user devices is expected to be issued during lifetime of the user device and/or respective secure element.

This may limit the functionality, especially a spectrum of (future) capabilities, of the user device, may compromise functional safety and security when operating user devices, or may even lead to that the devices cannot be configured properly, keeping in mind that not only the OS but also related data structures can be affected by updating procedures. Furthermore, interoperability and/or compatibility issues may arise when different entities provide asset or manage user profile datasets on the one hand, as well as operating datasets on the other hand. This can become particularly problematic in view of limited memory space of secure storage locations of secure elements and potentially limited amount of memory accesses, i.e., memory lifetime, which may be particularly impaired if so, memory hotspots are created, where locally significantly higher numbers of memory accesses take place in the secure element.

### Summary of the Invention

It may be seen as an object to improve the interaction between the user profile datasets, the secure elements and their OS. In particular, it may thus be seen as an object to provide a way to handle secure elements and their OS in a way that a future proof functional spectrum, safety and security may be assured, while not compromising deployability, availability, and/or data integrity, especially with regard to the limited memory space provided in secure elements. These objects are at least partly achieved by the subject-matter of the independent claims.

According to an aspect, a method of configuring a user device, in particular for secure operation involving a trusted entity, is provided, the method comprising the steps of providing at least one user profile dataset for a user to operate a secure element, such as an eUICC, of the user device, to access a secured service, such as at least one mobile telecommunication network; and assigning a memory quota to the at least one user profile dataset for determining an amount of memory space in a secure memory location of the secure element to be used and/or occupied by the at least one user profile dataset.

According to an aspect, a configuration program for configuring a user device, in particular for secure operation involving a trusted entity, is provided, wherein the configuration program comprises instructions which, when the configuration program is executed by a server device, a user device, and/or a secure element, cause the server device, the user device, and/or the secure element to carry out a corresponding method.

According to an aspect, an application program dataset for operating a secure element of a user device, such as an eUICC, is provided, wherein the application program dataset is configured to carry out a corresponding method and/or configured with a corresponding configuration program.

According to an aspect, a computer-readable data carrier may be provided having stored thereon a corresponding configuration program and/or a corresponding application program dataset.

According to an aspect, a user device is provided, such as a mobile device or an IoT device, in particular to be configured for secure operation involving a trusted entity, wherein the user device is configured to carry out a corresponding method, comprises a corresponding configuration program, a corresponding application program dataset, and/or corresponding computer-readable data carrier.

According to an aspect, a server device, such as a security server providing a secure location for handling user profiles, is provided, in particular for secure operation of user devices involving a trusted entity, wherein the server device is configured to carry out a corresponding method, comprises a corresponding configuration program, a corresponding application program dataset, and/or a corresponding computer-readable data carrier.

The memory quota may generally refer to a limit set on the amount of memory that a particular user profile dataset, related process, and/or user, or system can utilize. A memory quota can be assigned to a user profile dataset upon installation can define how much resources it is allowed to use. Alternatively, or additionally, a user profile dataset may declare a suggested quota to be accepted and/or amended by the managing entity.

The user profile dataset can comprise respective memory settings, such as values, parameters, definitions and/or respective tables or alike and may be stored in a secure memory region of the secure element. The user profile dataset may be configured for at least partly controlling an operation of the secure element and/or to handle the diversified data. Such diversified data can be defined and/or provided by a Connectivity Service Provider (CSP).

The secure element may be understood as a tamper resistant element (TRE). The application program dataset may comprise and/or involve program application and/or application programming interface (API). A complete operating system update dataset comprising at least one update data subset may be provided for replacing the previously installed operating system dataset. User profile datasets can be regarded as being managed on top of the respective OS.

The application program dataset may at least in part be provided on the secure element and can be configured to interact with the user device and/or at least one network terminal thereof. In other words, the application program dataset may at least partly run on the secure element, for example, as a part of an operating system dataset configured to operate the secure element. Additionally, an installation program dataset can be provided for installing and/or managing the application program dataset, such as for installing and/or updating an operating system dataset or respective update data subsets, including the application program dataset. Both, application program dataset and the installation program dataset may be integrated as data subsets into a customization dataset, such as a firmware suite allowing for customization of data on the secure element as described herein.

The application program dataset may be provided as a part of an operating system dataset of the secure element and/or may be configured to interact with the operating system dataset. A complete operating system dataset and/or subsets thereof may comprise the application program dataset. The operating system dataset and/or application program dataset may be configured to read, write, delete, manage and/or administer any kind of data object stored on the secure element and such are the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The proposed solution allows for limiting the amount of memory each user profile can use, and for setting up a mechanism to ensure a proper use of such quotas, memory space limitation and related computation performance issues can be avoided. This has the advantage over the prior art, that user profile datasets, operating system datasets and/or secure elements can provided and/or managed by different entities, for example in that they are delivered to manufacturing facilities, including OEM/ODM vendor facilities, and fabrication facilities of the secure element, regardless of a change to standards and/or specifications relating to the user device between the delivery and a later point of the time of deployment of user devices and/or the secure elements to customers. At first, the operating system dataset and/or application program dataset allow for configuring the user device and/or the secure element with the at least one user profile dataset in a way that it can be deployed to customers, enabling them to operate the user device by means of the at least one user provided a set. Later on, when adopting upcoming or following standards and/or specifications along, the memory quota helps to assure a respective functional spectrum, safety, and security when operating the secure element with the at least one user profile dataset.

Hence, the proposed solution allows for a configuration and update of the secure element "Over-The-Air", while maintaining reliability and functional safety of the secure element, in particular when undergoing certain updates and/or upgrades. The data to be updated can be managed by means of the memory quota. Thereby, the user profile dataset provided to secure elements and their OS and/or application programs can be handled in a way that interoperability and compatibility can be maintained.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to a possible embodiment, the method further comprises the step of making a memory space reservation for the at least one user profile dataset in the secure memory location based on the memory quota. The memory space reservation can refer to a physical amount of memory space that the at least one user profile dataset is allowed to use and/or occupy. For example, the memory space reservation can make use of a memory factor to consider a possibly exceeding the quota due to previously unaccounted operations. In other words, them memory space reservation can be bigger or smaller than the quota according to the respective requirements and expected operations. This helps in managing and limiting memory use in order to enhance or at least maintain overall performance and future proof functional spectrum.

According to a possible embodiment, the method further comprises the step assigning at least one memory address to be used and/or occupied by the at least one user profile dataset in the secure memory location. For example, at least certain parts of the user profile dataset and/or data object handled thereby can be assigned to at least one specific memory address. This further helps in managing and limiting memory use in order to enhance or at least maintain overall performance and future proof functional spectrum.

According to a possible embodiment, the method further comprises the step of assigning at least one memory address space be used and/or occupied by the at least one user profile dataset in the secure memory location. For example, at least certain parts of the user profile dataset and/or data object handled thereby can be assigned to at least one memory address space. This additionally helps in managing and limiting memory use in order to enhance or at least maintain overall performance and future proof functional spectrum.

According to a possible embodiment, at least one further user profile dataset is provided to the secure element and configured to operate the secure element in addition to the at least one user profile dataset. At least two user profile datasets may be provided to operate the secure element. The user profile datasets may be operated in parallel, i.e., they can be enabled at the same time, thus allowing for MPE. A memory quota can be assigned to at least one or any desired or required number of the user profile datasets. This helps in managing the coexistence of the user profile datasets in terms of memory use and performance.

According to a possible embodiment, at least two user profile datasets are provided, of which at least one user profile dataset has a priority of using the secure memory location over the at least one further user profile dataset. For example, such a priority profile can be business or government service related, while a profile lower priority can be related to private applications. This helps in managing memory resources and to avoid unwanted data changes, as well as to improve flexibility in handling the user profile datasets, secure elements and their OS and/or application programs in a way that a future-proof functional spectrum, safety and security may be assured, while not compromising their deployability and availability.

According to a possible embodiment, the method further comprises attributing at least one priority parameter to the at least one user profile dataset. Priority parameters can be defined such that a hierarchy with primary profiles and at least secondary profiles or even tertiary profiles is created. The user profile datasets as well as respective memory quotas may be handled according to the priority parameter, for example, in line with a respective hierarchy. This further helps in managing the coexistence of the user profile datasets in terms of memory use and performance.

According to a possible embodiment, the method further comprises the step of defining at least one profile group designator that the at least one user profile dataset can be assigned to. For example, such group designators can be used to get designate the user profile datasets to respective groups, such as a business group, a government group, a private group, or alike. This helps in managing coexisting user profile datasets and respective memory resources, secure elements and their OS and/or application programs in a way that a functional spectrum, safety and security may be assured, while not compromising their deployability and availability.

According to a possible embodiment, the method further comprises the steps of initiating a download and/or import of at least one data object having a pre-defined memory requirement into the secure storage location involving the at least one user profile dataset, and checking whether the memory requirement is within available memory space according to the memory quota. The memory requirement can indicate an estimated and/or predicted memory usage of the at least one data object, which may be any download and/or import concerning the at least one user dataset, operating system dataset and/or data objects used thereby. The data object may refer to or be a further user profile dataset. The available memory space can be the difference between the occupied memory space in the memory quota of at least one user profile dataset are a group of user profile datasets. The user can be informed of whether the memory requirement lies within the respective memory quota. This additionally helps in managing memory resources and to avoid unwanted data changes, as well as to improve flexibility in handling the user profile datasets, secure elements and their OS and/or application programs in a way that a future-proof functional spectrum, safety and security may be assured, while not compromising their deployability and availability.

According to a possible embodiment, the method further comprises the step of refusing the download and/or import of at least one data object if the memory requirement leads to that the memory quota is being potentially exceeded. Again, a memory factor may be used as a security margin to estimate whether the memory corner is essentially exceeded. This additionally improves flexibility in handling user profile datasets, secure elements and their OS and/or application programs in a way that a future-proof functional spectrum, safety and security may be assured, while not compromising their deployability and availability.

### Brief Description of the Drawings

- Fig. 1: is a schematic illustration of an exemplary embodiment of a configuration system configured for carrying out a method according to the present invention.
- Fig. 2: shows a schematic illustration of an exemplary scheme for deciding on downloading/importing a data object to a secure element.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

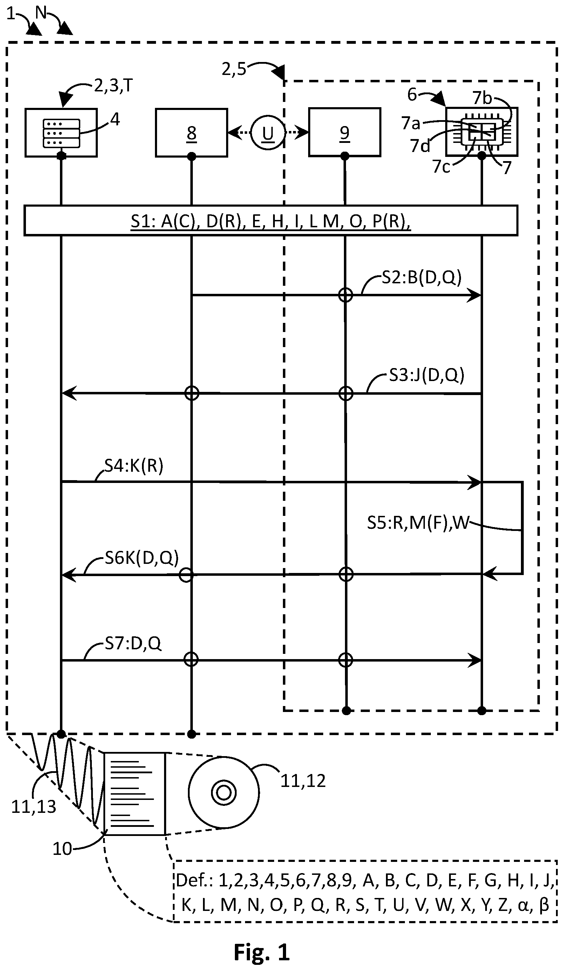

Fig. 1 shows a schematic illustration of a configuration system 1 comprising a computing device 2, for instance, in the form of a server device 3 controlled by a trusted entity T, which can include a hardware security module 4 adapted to store, manage and/or provide, application program datasets A operating system datasets O, and/or user profile datasets P for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smartwatch, etc., to be associated with a personal entity. For example, the server device 3 may be provided in the form of a Server for Subscription Manager Data Preparation + (SM-DP+).

In the present example, the user devices 5 may be adapted for secure operation, transactions and/or communication, e.g., via a telecommunication network N by means of at least one user profile dataset P to be saved in a respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location may provide different memory regions, such as at least one first memory region 7a and at least one second memory region 7b.

The operating system dataset O comprises an executable data subsets E which can be provided in the form of the application program dataset A of an application process C configured to access at least one data object D. The executable data subset E can be updated from the previous version to the later version by means of update data subsets which can be provided in the form of data objects D, such as data packages. The data object D can have a predefined data formats and memory requirements R.

A management application 8 may be provided which can be configured to allow a user U to communicate with the user device 5, in particular the secure element 6, for example, directly and/or through a communication interface 9 to the user device 5. The management application 8 can be provided in the form of a remote manager, such as an eSIM IoT remote manager (eIM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer data packages, such as eUICC Packages, for instance to carry out Profile State Management and eIM configuration tasks by means of the eIM. For example, the communication interface 9 may be provided as a part of a local management application, such as a IoT Profile Assistant (IPA), which may take the form of an IoT Profile Assistant (IPAd) provided to the user device 5, and/or an IoT Profile Assistant provided (IPAe) arranged in the secure element 6. Alternatively, or additionally, the management application 8 and/or communication interface 9 may be provided as a local profile assistant (LPA) provided to the user device 5 and/or arranged in the secure element 6

Furthermore, the operating system dataset O may comprise an installation program dataset I, at least one application program dataset A, at least one user profile P and/or security credentials H, including application identifiers, authentication certificates and/or security keys. The security credentials H may comprise any kind of credentials defined by e.g., the GSMA, or alike. The security keys may comprise any kind of cryptographic code or key element which may be adapted to interact with the user devices 5, the secure elements 6, and/or the server device 3 of the trusted entity T as an issuer of any part of the operating system dataset O and/or any component thereof. The authentication certificates may be any kind of electronic certificate, for example, that can be issued by the trusted entity T, for authenticating an origin of the user devices 5, the secure elements 6, the secure storage location 7, the application program dataset A and/or the operating system dataset O. Transmission lines (not shown) may be provided for handling and/or transferring the operating system dataset O may comprise any kind of wired and/or wireless transmission chains, including the Internet (for transmissions "Over-The-Air") as well as other physical and/or non-physical data carriers, which can be configured and secured as desired and required by the configuration system 1 and its components.

In any of the embodiments of the configuration system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the configuration system 1 and any components thereof communicate as specified in the security program 10. Parameters associated with and/or underlying the configuration system 1, any of the components thereof and/or any steps S carried out thereby, can be defined in and/or by the configuration program 10.

In a first step S1, the server device 3 may provide any of the data components of the configuration system 1, including the operating system dataset O, possibly along with the application program dataset A, data objects D, security credentials H, installation program dataset I, respective diversified data L, and/or user profile P associated with the user U, to the secure element 6 of the user device 5, for example through the communication interface 9 to be stored in the secure storage location 7 for deployment to the user U. Any data objects D, in particular the user profile dataset P, may be provided with a memory quota M defining an amount of memory in the secure storage location 7, the respective data object D and/or user profile dataset P is allowed to occupy and/or to use. The data objects D and the at least one user profile dataset P may be further provided with memory requirements R indicating an amount of memory they might occupy and/or use, as well as possibly any usage characteristics, such as a certain frequency of data access or alike.

In a second step S2, the user U may decide to initiate a download and/or import of a certain data object D asset or a further user profile dataset P to the secure element 6 by a respective data request B. Based on the data request B, the secure element 6 can send request message J to the server device 3. In a fourth step, be server device 3 may send a response message K to the secure element 6 regarding respective memory requirement R of the requested data object D and/or further profile dataset Q. Alternatively, or additionally, the server device 3 may already send the requested data object D asset or further user profile data set, for example in such a manner that it remains to be handled by the communication interface 9 and/or the secure element 6 in a manner that is not installed in the secure location 7, for example in that it is held and/or handled by an API provided by the application program dataset A.

In a fifth step S5, the application program dataset A may assess whether the memory requirements R are within a respective memory quota M assigned to the data object D and/or the further user profile dataset Q. For example, in the assessment, a memory factor F may be used to make sure that the memory requirements R lie within an available memory space W which is left in the secure storage location 7. The available memory space W may be calculated as a difference between the memory quota M of the data objects D including the application program dataset A, executable data subsets E, operating system dataset O and/or user profile dataset P already stored in the secure storage location 7, which may take into account that respective data may be assigned to a specific memory region 7a to 7d.

If the assessment is positive, the secure element 6 can send another response message K back to the server device 3, for example, informing the server device about that download and/or import of the data object D and/or further user profile dataset Q is to be performed. In a seventh step S7, the data object D and/or further user profile dataset Q may be downloaded/imported into the secure element 6. The data object D and/or further user profile dataset Q may then be further handled by the secure element 6, for example, by means of the application program dataset A and/or operating system dataset O.

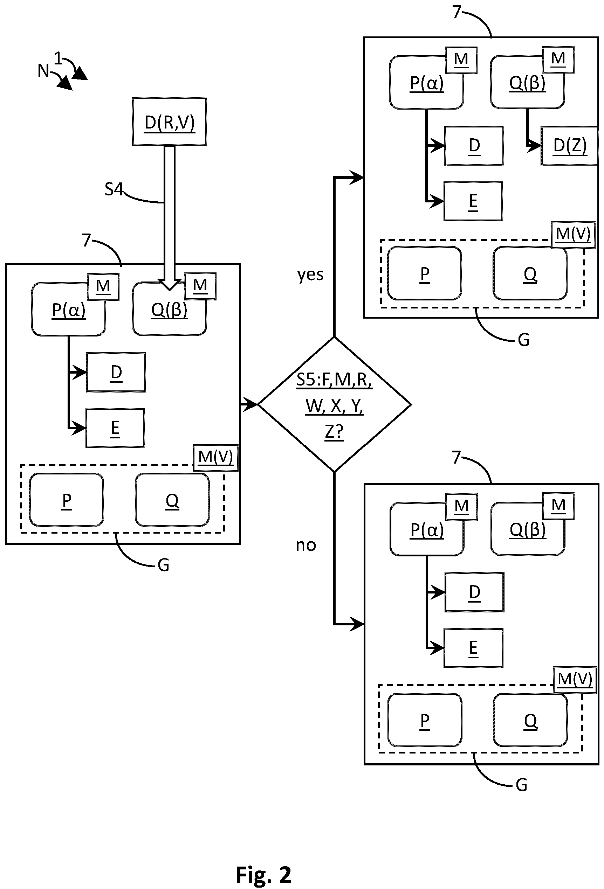

Fig. 2 shows a schematic illustration of an exemplary scheme for deciding on downloading/importing a data object D to a secure element 6. Here it becomes apparent that data objects D and/or user profile data sets P, Q can be provided with priority parameters V, such as, for example that primary profiles α, such as main profiles, and secondary profiles β, are defined. The primary profiles α can have a higher priority and the secondary profiles β according to the respective priority parameter value, e.g., α, β, et cetera, thus forming a certain hierarchy. Furthermore, the user profile data sets may also be organised according to profile groups G containing at least one user profile dataset P, Q, possibly along with respective memory quotas and/or priority parameters V assigned to an entire profile group G.

When, for example, in the fourth step S4, a data object D is requested with the further profile dataset Q, it may be checked with other memory requirements R are aligned with the data quota M of the further profile dataset Q. In the fifth step S5, can be decided whether the data object D fulfils requirements for being installed/stored in the secure memory location 7. If "yes", then the data object is stored in the secure memory location, for example assigned to a respective, memory address X, memory address space Y and/or with a respective memory space reservation Z. If the assessment is "no" then storing the respective data object D may be denied or aborted, or alike.

According to the present example, the memory quota M can allow proper management of different user profile datasets P, Q coexisting in a secure element 6, and enable certain user profile datasets P, Q, to be prioritized in terms of accessible resources accessible, in particular regarding available memory space. Besides ensuring that sufficient memory space is available, tasks of or assigned to a certain user profile dataset P, Q, can be prioritized over others. Any of the distinctions described herein regarding memory quotas M, memory space reservations Z, and/or priority parameters V can be further expanded to involve assignments to different memory regions 7a, 7b, for example, in the form of volatile and/or non-volatile memory. In particular, memory quotas M and/or memory space reservations Z may differ for different memory regions 7a, 7b, according to their technical properties as volatile and/or non-volatile memory. Alternatively, or additionally, in line with or similar to the priority parameters V, certain security levels may be assigned to the different memory regions 7a, 7b.

As an exemplary application, users U could be rental companies having user devices 5 in the form of cars, vans, trucks, or alike, and need to ensure that a primary profile α which is supposed to be used as a main profile (e.g., managed by the company) will work perfectly even if many additional users U download their own profiles to the secure element 6. The secure element 6 may block a user profile P, Q, to perform a certain operation, if it does not have the required priority, such as top priority, first priority, or alike, to ensure a best possible performance of related functions and operations in line with the respective priority parameter V.

Another exemplary application could be that of a user device 5 in the form of a mobile device used by a private person as a user U, with both, a business-profile and a private-profile, for instance, if the user device 5 is provided by the company. The company can let the users U use their own profile in the device, but request to have certain priority with regards to the usage of the resources. In such a use case, job and private groups may have been defined, with job-related profiles and private-related profiles being downloaded into the appropriate profile group G which may be provided with a corresponding priority parameter V.

Furthermore, it should be considered, that the concept of memory quotas M can be combined and further enhanced with using memory space reservations Z as desired or required for managing the available memory space. For example, memory space reservation Z can be an amount of memory space which is being asked to be reserved by a certain user profile dataset P, Q, whereas a memory quota M can be regarded as a limit or threshold which cannot be exceed. A memory space reservation Z may thus be considered as an allocated memory space or amount which may not be fully used, while a memory quota M can limit the use of memory space dedicated to the respective user profile dataset P, Q.

According to the present embodiments, a memory quota M can be expected to be greater or equal to an associated memory space reservation Z but does need to consider any memory space occupied when their respective user profile dataset P, Q is not in use. The user profile dataset P, Q can be assured of that it will have the memory space reservation Z available, but any memory use or occupancy up to the respective memory quota M must not necessarily be guaranteed as being readily available. Instead, at least a part of remaining available memory space W may be used respective other user profile datasets P, Q.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: configuration system
- 2: computing device
- 3: server device
- 4: hardware security module
- 5: user device
- 6: secure element
- 7: secure storage location
- 7a: first memory region
- 7b: second memory region
- 8: remote management application
- 9: communication interface
- 10: configuration program
- 11: computer-readable data carrier
- 12: computer-readable medium
- 13: data carrier signal

- A: application program dataset
- B: data request
- C: application process
- D: data object
- E: executable data subset
- F: memory factor
- G: profile group
- H: security credentials
- I: installation program dataset
- J: request massage
- K: response message
- L: diversified data
- M: memory quota
- N: mobile telecommunication network
- O: operating system dataset
- P: user profile dataset
- Q: further user profile dataset
- R: memory requirement
- S: step
- T: trusted entity
- U: user
- V: priority parameter
- W: available memory space
- X: memory address
- Y: memory address space
- Z: memory space reservation

- α: primary profile
- β: secondary profile

- S1: provide data
- S2: make data request
- S3: send request message
- S4: receive response message
- S5: make memory assessment
- S6: provide memory assessment
- S7: download/import data

## Claims

1. Method of configuring a user device (5), in particular for secure operation involving a trusted entity (T), the method comprising the steps of
providing at least one user profile dataset (P) for a user (U) to operate a secure element (6), such as an eUICC, of the user device (5), to access a secured service, such as at least one mobile telecommunication network (N); and
assigning a memory quota (M) to the at least one user profile dataset (P) for determining an amount of memory space in a secure memory location (7) of the secure element (6) to be used and/or occupied by the at least one user profile dataset (P).

2. Method according to claim 1, further comprising the step of making a memory space reservation (Z) for the at least one user profile dataset (P) in the secure memory location (7) based on the memory quota (M).

3. Method according to claim 1 or 2, further comprising the step of assigning at least one memory address (X) to be used and/or occupied by the at least one user profile dataset (P) in the secure memory location (7).

4. Method according to at least one of claims 1 to 3, further comprising the step of assigning at least one memory address space (Y) to be used and/or occupied by the at least one user profile dataset (P) in the secure memory location (7).

5. Method according to at least one of claims 1 to 4, wherein at least one further user profile dataset (Q) is provided to the secure element (6) and configured to operate the secure element (6) in addition to the at least one user profile dataset (P).

6. The method according to at least one of claims 1 to 5, wherein at least two user profile datasets (P, Q) are provided, of which at least one user profile dataset (P) has a priority of using the secure memory location (7) over the at least one further user profile dataset (Q).

7. Method according to claim at least one of claims 1 to 6, further comprising the step of attributing at least one priority parameter (V) to the at least one user profile dataset (P).

8. Method according to at least one of claims 1 to 7, further comprising the step of defining at least one profile group designator (G) that the at least one user profile dataset (P) can be assigned to.

9. Method according to at least one of claim 1 to 8, further comprising the steps of initiating a download and/or import of at least one data object (D) having a pre-defined memory requirement (R) into the secure storage location (7), and checking whether the memory requirement (R) is within available memory space (W) according to the memory quota (M).

10. Method according to at least one of claim 1 to 9, further comprising the step of refusing the download and/or import of at least one data object (D) if it leads to that the memory quota (M) is being potentially exceeded.

11. Configuration program (10) for configuring a user device (5), in particular for secure operation involving a trusted entity, wherein the configuration program (10) comprises instructions which, when the configuration program (10) is executed by a server device (3), a user device (5), and/or a secure element (6), cause the server device (3), the user device (5), and/or the secure element (6) to carry out a method of at least one of claims 1 to 10.

12. Application program dataset (A) for operating a secure element (6) of a user device (5), such as an eUICC, wherein the application program dataset (A) is configured to carry out a method according to at least one of claims 1 to 10 and/or configured with a configuration program (10) according to claim 11.

13. Computer-readable data carrier (11, 12, 13) having stored thereon a configuration program (10) according to claim 11 and/or an application program dataset (A) according to claim 12.

14. User device (5), such as a mobile device or an IoT device, in particular to be configured for secure operation involving a trusted entity (T), wherein the user device (5) is configured to carry out a method according to at least one of claims 1 to 10, comprises a configuration program (10) according to claim 11, an application program dataset (A) according to claim 12 and/or a computer-readable data carrier (11, 12, 13) according to claim 13.

15. Server device (3), such as a security server providing a secure location for handling user profiles (P), in particular for secure operation of user devices (5) involving a trusted entity (T), wherein the server device (4) is configured to carry out a method according to at least one of claims 1 to 10, comprises a configuration program (10) according to claim 11, an application program dataset (A) according to claim 12 and/or a computer-readable data carrier (11, 12, 13) according to claim 13.
